# FASCICULE DE BREVET EUROPEEN

(11) **EP 1 142 085 B1**
(45) Date de publication et mention de la délivrance du brevet: **26.10.2005**
(21) Numéro de dépôt: 99973361.1
(22) Date de dépôt: 02.12.1999
(51) Int. Cl.: H02K 21/04, H02K 1/27

(54) **MACHINE ELECTRIQUE TOURNANTE A DOUBLE EXCITATION PERFECTIONNEE**
DREHENDE ELEKTRISCHE MASCHINE MIT VERBESSERTER DOPPELERREGUNG
ROTATING ELECTRIC MACHINE WITH IMPROVED DOUBLE EXCITATION

(30) Priorité: 07.12.1998 FR 9815424
(43) Date de publication de la demande: 10.10.2001
(73) Titulaire: CENTRE NATIONAL DE LA RECHERCHE SCIENTIFIQUE (CNRS), 75016 Paris (FR)
(72) Inventeur: LUCIDARME, Jean, F-91700 Sainte Geneviève des Bois (FR); GABSI, Mohamed, F-94230 Cachan (FR); LECRIVAIN, Michel, F-94200 Ivry sur Seine (FR); BEN AHMED, Hamid, F-94100 Saint Maur (FR)
(74) Mandataire: Habasque, Etienne J. Jean-François
(86) Numéro de dépôt international: PCT/FR1999/002994
(87) Numéro de publication internationale: WO 2000/035065

(56) Documents cités:
- DE-A- 2 109 569
- FR-A- 1 439 764
- FR-A- 2 762 722
- US-A- 3 443 201
- PATENT ABSTRACTS OF JAPAN vol. 097, no. 001, 31 janvier 1997 (1997-01-31) -& JP 08 251888 A (TOSHIBA CORP), 27 septembre 1996 (1996-09-27)

## Description

La présente invention concerne les machines électriques tournantes et se rapporte plus particulièrement aux machines synchrones, telles que les alternateurs pour véhicules automobiles, les moteurs de traction ou autres.

Parmi les machines connues, on peut citer les machines à excitation par bobinages montés dans le rotor, les machines à excitation par aimants montés dans le rotor et les machines à double excitation par bobinages et aimants montés dans le rotor.

De telles machines sont notamment décrites dans la demande de brevet FR-A-2761211 déposée le 20 mars 1997 par le Centre National de la Recherche Scientifique.

Une telle machine comprenant un rotor dont le circuit magnétique porte des éléments d'excitation et un stator dont le circuit magnétique porte un bobinage statorique, est caractérisée en ce que le circuit magnétique du rotor comporte montés sur un arbre des flasques d'extrémités et au moins un disque denté disposé entre les flasques d'extrémité, les dents du disque denté étant régulièrement réparties à sa périphérie et au moins une pièce annulaire montée sur les flasques d'extrémité et munie de lumières régulièrement réparties à sa périphérie et dans chacune desquelles est engagée une dent d'au moins un disque denté, les flasques d'extrémité et ledit au moins un disque denté définissant entre eux, des intervalles dans lesquels sont logés des éléments d'excitation.

En outre, la demande de brevet FR-A-2762722 déposée le 24 avril 1997 par le Centre National de la Recherche Scientifique décrit une machine électrique tournante du type à double excitation montée sur un arbre comprenant un rotor dont le circuit magnétique porte au moins un élément d'excitation et un stator dont le circuit magnétique porte un bobinage statorique, caractérisée en ce que ledit au moins un élément d'excitation comprend au moins un aimant annulaire associé à au moins deux disques munis chacun de dents radiales régulièrement réparties à leur périphérie et au moins une pièce annulaire munie de lumières dans chacune desquelles est engagée sans contact, une dent d'au moins un disque denté, et en ce que le circuit magnétique du stator comporte un nombre pair au moins égal à deux, d'éléments annulaires de circuit magnétique, au moins un bobinage d'excitation statorique étant agencé entre au moins deux éléments voisins parmi lesdits éléments de circuit magnétique.

Bien que donnant des résultats acceptables et permettant la suppression des balais, les machines du type précité présentent une surface d'entrefer active d'excitation rotorique par aimants réduite.

L'invention vise à créer une machine à double excitation qui tout en présentant les mêmes avantages que la machine précitée, notamment en ce qui concerne le réglage par la double excitation et la suppression des balais, comporte une excitation rotorique par aimants renforcée.

Elle a donc pour objet une machine électrique tournante à double excitation selon la revendication 1 et comprenant un rotor et un stator dont le circuit magnétique porte un bobinage statorique, dans laquelle le stator comporte un noyau magnétique annulaire et au moins un bobinage d'excitation, le bobinage statorique étant bobiné sur le noyau, l'ensemble étant disposé dans au moins une couronne magnétique en contact avec la surface extérieure du noyau statorique, ladite au moins une couronne comprenant au moins un rebord d'extrémité radial, et le rotor comporte un circuit magnétique présentant des portions périphériques, lesdits rebords d'extrémité radiaux de ladite au moins une couronne magnétique du stator, définissant avec les portions périphériques du circuit magnétique du rotor des entrefers formant trajets de retour de flux, caractérisée en ce que le rotor comporte des flasques magnétiques d'extrémité dont les portions périphériques définissent avec les rebords d'extrémité radiaux de ladite au moins une couronne magnétique du stator, lesdits entrefers de retour de flux et disposés entre les flasques magnétiques d'extrémité, un noyau magnétique pourvu de dents radiales régulièrement réparties à sa périphérie, des aimants annulaires disposés de part et d'autre des extrémités axiales du noyau et appliqués contre le noyau par les flasques magnétiques d'extrémité et plusieurs pièces magnétiques de liaison des flasques d'extrémité entre eux, formées de barres de liaison des flasques d'extrémité logées dans les intervalles entre les dents radiales du noyau magnétique.

L'invention sera mieux comprise à l'aide de la description qui va suivre, donnée uniquement à titre d'exemple et faite en se référant aux dessins annexés, sur lesquels :
- la Fig.1 est une vue en élévation et en coupe d'une machine tournante suivant l'invention;
- la Fig.2 est une vue en coupe suivant la ligne 2-2 de la figure 1;
- la Fig.3 est une vue en perspective en partie éclatée d'un autre mode de réalisation de la machine tournante suivant l'invention;
- la Fig.4 est une vue en élévation et en coupe de la machine de la figure 3; et
- la Fig.5 est une coupe suivant la ligne 5-5 de la figure 4.

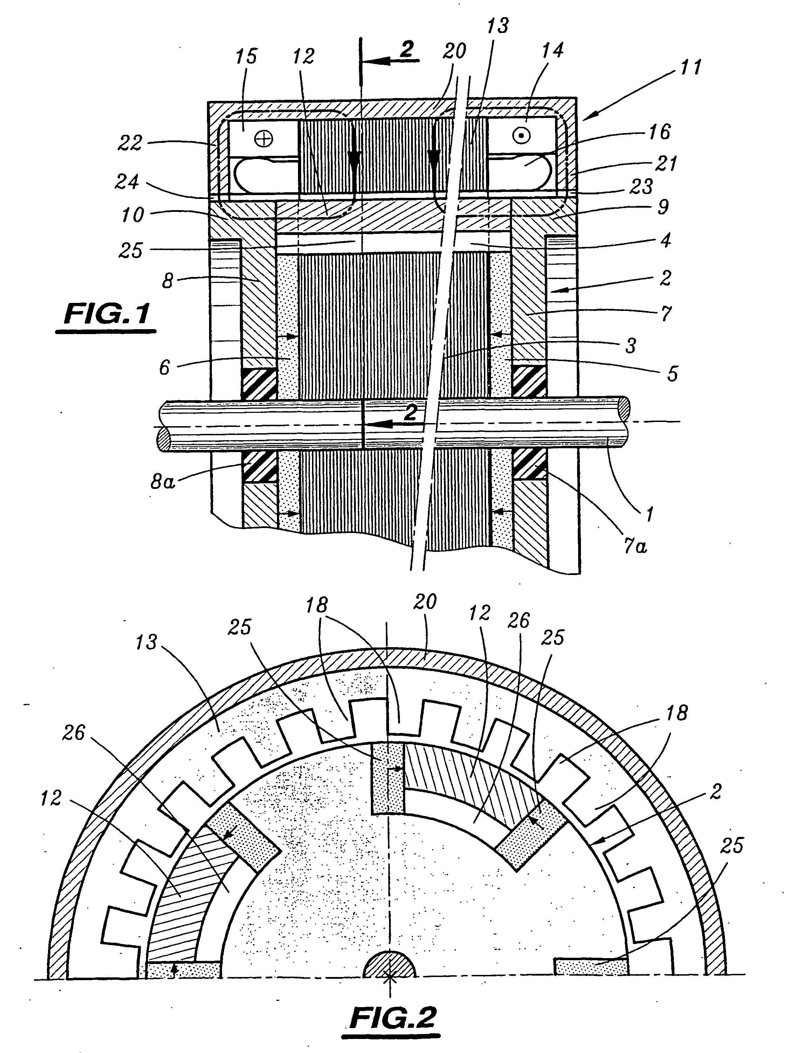

La machine tournante représentée aux figures 1 et 2 comporte un arbre 1 sur lequel est monté un rotor 2 comprenant un circuit magnétique formé d'un noyau en tôle feuilletée 3 pourvu à sa périphérie de dents radiales 4 régulièrement réparties.

De part et d'autre du noyau 3 sont disposés axialement des aimants d'excitation annulaires 5,6 de polarités inverses qui sont appliqués contre le noyau par des flasques d'extrémité respectifs 7,8 en matière magnétique montés sur l'arbre 1.

Des bagues 7a,8a en matière amagnétique par exemple en matière isolante, sont interposées entre l'arbre 1 et les flasques 7,8 correspondants.

Chaque flasque 7,8 comporte un rebord axial périphérique 9,10 dirigé vers l'extérieur destiné à coopérer avec le circuit magnétique d'un stator 11 associé au rotor 2. Dans les intervalles entre les dents 4 du noyau 3 sont logées des barres axiales 12 en matériau magnétique, de liaison des flasques d'extrémité 7,8 entre eux. Les barres 12 sont avantageusement réalisées en forme de tuiles avec une surface extérieure convexe dont la courbure correspond à celle de la surface extérieure du rotor.

Le stator 11 comporte un noyau annulaire en tôle magnétique feuilleté 13 de part et d'autre duquel sont disposés des bobinages d'excitation 14,15 parcourus par des courants de signes opposés.

Un bobinage statorique 16 entouré par les bobinages d'excitation 14,15, est bobiné sur le noyau 12 qui présente à cet effet une surface intérieure formée de créneaux 18 comme représenté à la figure 2.

L'ensemble du stator est logé dans une couronne magnétique extérieure 20 qui est en contact avec la surface extérieure du noyau magnétique 13 et qui comporte des rebords radiaux d'extrémité 21,22 disposés en regard des rebords axiaux 9,10 respectifs des flasques 7,8 du rotor afin de définir des entrefers 23,24 formant des trajets de retour de flux.

Selon une variante, les portions périphériques des flasques 7,8 peuvent être dépourvues de rebords axiaux. Il suffit alors que les flasques 7,8 aient une épaisseur suffisante pour que leurs portions périphériques définissent avec les rebords radiaux 21,22 de la couronne magnétique du stator; des entrefers de retour de flux de dimensions appropriées.

Ainsi qu'on le voit clairement à la figure 2, entre chaque barre 12 de liaison des flasques d'extrémité 7,8 entre eux et les dents voisines 4 du noyau 3, sont interposés des aimants radiaux 25 qui affleurent la surface extérieure du rotor 2 définie par les extrémités des dents 4 et la surface extérieure des barres de liaison 12.

Dans le présent mode de réalisation, les barres de liaison 12 sont de section constante sur toute leur longueur.

La surface intérieure de chaque barre est séparée du fond de l'intervalle correspondant entre les dents 4 du noyau 3 par un jeu 26.

On peut également disposer dans ce jeu, un aimant supplémentaire (non représenté).

La présence dans le rotor 2 des barres de liaison 12 disposées entre les flasques 7,8 permet d'obtenir entre le stator et le rotor, une surface d'entrefer centrale active ayant N paires de pôles non court-circuités magnétiquement.

Les rebords axiaux des flasques 7,8 et les rebords radiaux 21,22 de la couronne magnétique extérieure 20 définissent deux surfaces d'entrefer 23,24 de retour de flux entre le stator et le rotor.

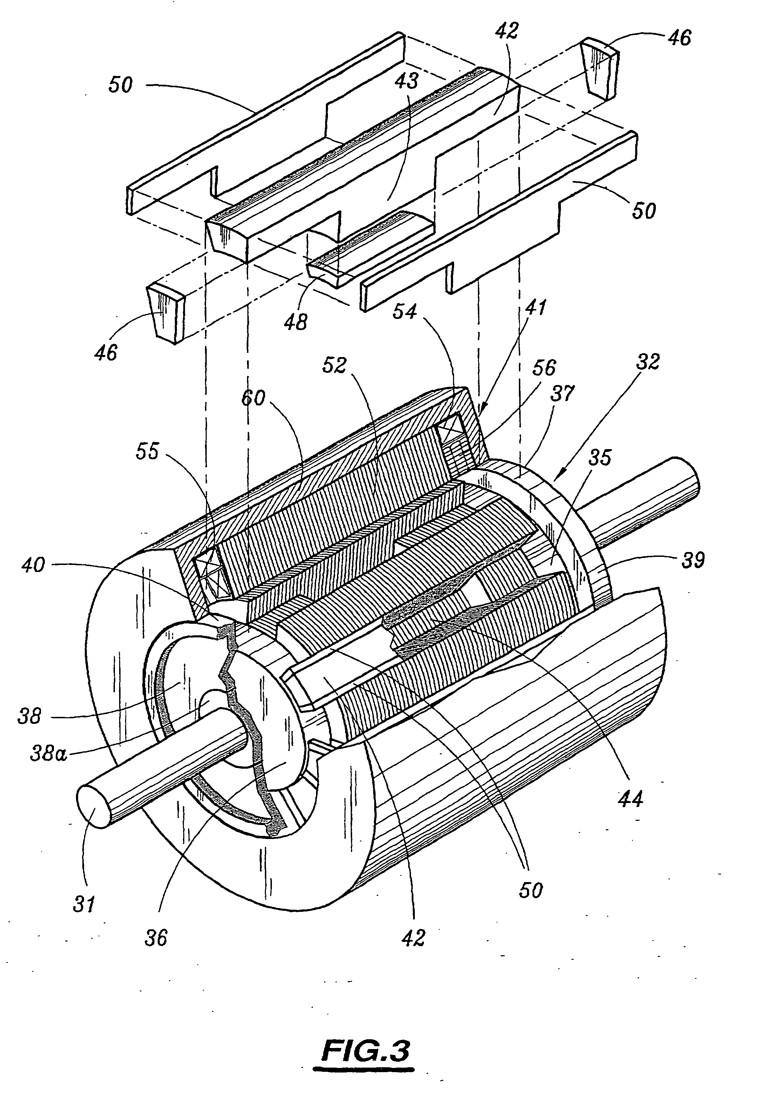

La machine représentée aux figures 3 à 5 diffère essentiellement de la machine décrite en référence aux figures 1 et 2 par la forme des barres de liaison entre les flasques d'extrémité du rotor.

Ainsi qu'on peut le voir aux figures 3 à 5, la machine comporte, porté par un arbre 31, un rotor 32 comprenant un circuit magnétique formé d'un noyau en tôle feuilleté 33 pourvu à sa périphérie de dents 34 régulièrement réparties.

De part et d'autre du noyau 33 sont disposés axialement des aimants d'excitation annulaires 35,36 de polarités inverses qui sont appliqués contre le noyau 33 par des flasques d'extrémité respectifs 37,38 en matière magnétique montés sur l'arbre 31.

Des bagues 37a,38a en matière amagnétique, par exemple en matière isolante sont interposées entre l'arbre 31 et les flasques 37,38 correspondants.

Chaque flasque 37,38 comporte un rebord axial 39,40 dirigé vers l'extérieur destiné à coopérer avec le circuit magnétique d'un stator 41 associé au rotor 32.

Dans les intervalles entre les dents 34 du noyau 33 sont logées des barres 42 en matériau magnétique de liaison des flasques 37,38 entre eux.

Chaque barre de liaison 42 a la forme d'un T. Elle s'étend entre les flasques d'extrémité 37,38 et son pied central 43 est engagé dans un logement 44 ménagé dans le fond de chaque intervalle entre les dents 34 du noyau 33.

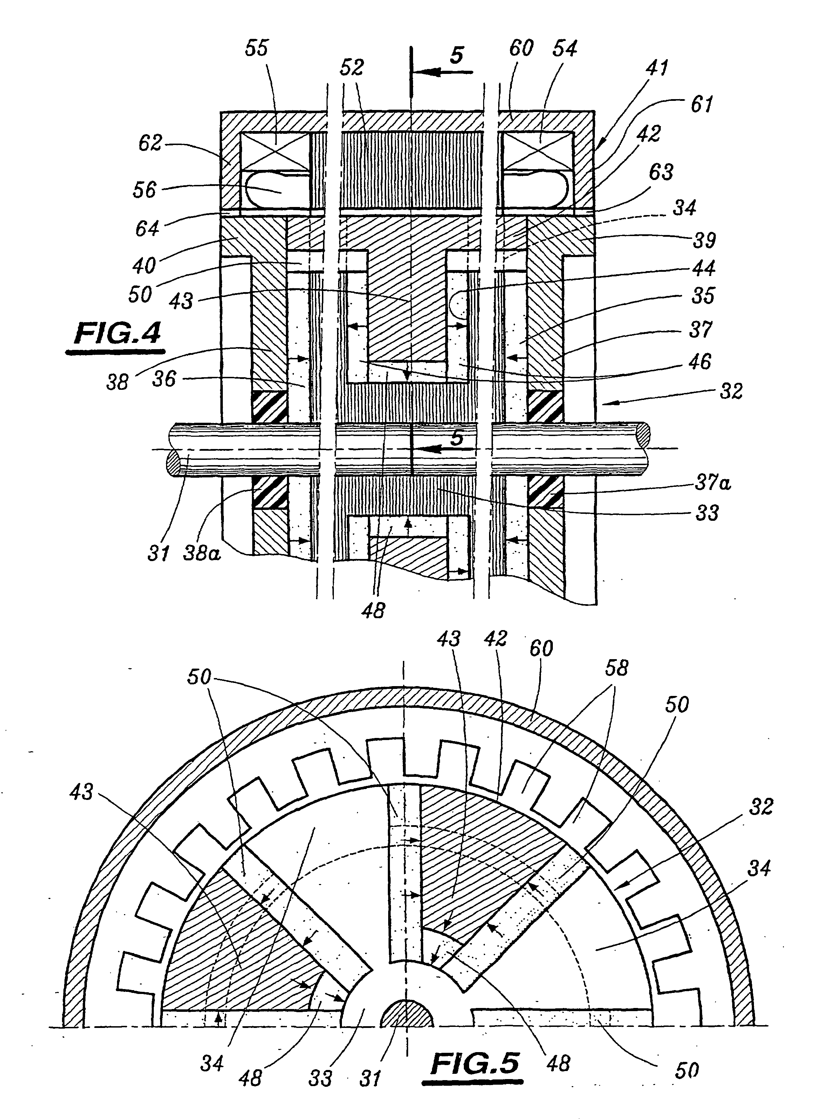

Comme représenté à la figure 4, entre le pied 43 de la barre de liaison 42 et les parois du logement 44 sont interposés des aimants supplémentaires 46 disposés de part et d'autre des faces axiales du pied 43 et un aimant supplémentaire 48 disposé entre l'extrémité du pied 43 opposée à la barre proprement dite et le fond du logement 44.

Ainsi qu'on le voit mieux à la figure 5 entre le pied 43 de chaque barre 42 et les parois radiales des dents 34 consécutives du noyau 33, sont disposés des aimants supplémentaires radiaux 50 que l'on aperçoit également sur la vue en perspective de la figure 3.

Comme dans le mode de réalisation de la figure 1, le stator de la machine représentée aux figures 3 à 5 comporte un noyau statorique annulaire feuilleté 52 de part et d'autre duquel sont disposés des bobinages d'excitation 54,55.

Un bobinage statorique 56 est bobiné intérieurement aux bobinages d'excitation 54,55 sur le noyau 52 qui présente à cet effet une surface intérieure formée de créneaux 58 dirigés vers la surface extérieure du rotor 32 (Fig.5).

L'ensemble du stator est logé dans une couronne magnétique extérieure 60 en contact avec la périphérie du noyau magnétique statorique 52. La couronne extérieure 60 comporte des rebords radiaux d'extrémité 61,62, disposés en regard des portions périphériques ou rebords axiaux respectifs 39,40 des flasques magnétiques 37,38 du rotor et définissent avec lesdits rebords, des entrefers 63,64 formant des trajets de retour de flux.

L'agencement qui vient d'être décrit diffère de celui décrit en référence aux figures 1 et 2, en ce qu'il offre plus de place pour loger des aimants autour des dents du rotor, ce qui permet par conséquent d'augmenter le flux dans l'entrefer et le couple délivré par la machine.

Il comporte un seul noyau denté rotorique pour un nombre identique de cellules élémentaires.

Il ne comporte pas d'isthme au rotor tandis que la présence des barres magnétiques en forme de T simplifie la conception de la machine.

## Revendications

1. Machine électrique tournante à double excitation comprenant un rotor et un stator dont le circuit magnétique porte un bobinage statorique (16;56), dans laquelle le stator comporte un noyau magnétique annulaire (13;52) et au moins un bobinage d'excitation (14,15;54,55), le bobinage statorique (16;56) étant bobiné sur le noyau, l'ensemble étant disposé dans une couronne magnétique (20;60) en contact avec la surface extérieure du noyau statorique (13;52), ladite couronne comprenant deux rebords d'extrémité radiaux (21,22;61,62), et le rotor (2;32) comporte un circuit magnétique présentant des portions périphériques (9,10;39,40), lesdits rebords d'extrémité radiaux (21,22;61,62) de ladite couronne magnétique (20;60) du stator, définissant avec les portions périphériques (9,10;39,40) du circuit magnétique du rotor (2;32) des entrefers (23,24;63,64) formant trajets de retour de flux, **caractérisée en ce que** le rotor comporte des flasques magnétiques d'extrémité (7,8;37,38) dont les portions périphériques (9,10;39,40) définissent avec les rebords d'extrémité radiaux (21,22;61,62) de ladite couronne magnétique du stator (11;41), lesdits entrefers de retour de flux et disposés entre les flasques magnétiques d'extrémité (7,8; 37,38), un noyau magnétique (3;33) pourvu de dents (4;34) radiales régulièrement réparties à sa périphérie, des aimants annulaires (5,6;35,36) disposés de part et d'autre des extrémités axiales du noyau (3;33) et appliqués contre le noyau par les flasques magnétiques d'extrémité et plusieurs pièces magnétiques de liaison des flasques d'extrémité entre eux, formées de barres (12;42) de liaison des flasques d'extrémité (7,8;37,38) logées dans les intervalles entre les dents radiales (4;34) du noyau magnétique (3;33).

2. Machine électrique tournante suivant la revendication 1, **caractérisée en ce que** des aimants supplémentaires (25;50) sont interposés entre chacune desdites barres (12;42) et au moins les parois latérales des dents radiales (4;34) du noyau définissant lesdits intervalles.

3. Machine électrique tournante suivant l'une des revendications 1 et 2, **caractérisée en ce que** les barres de liaison (12) des flasques d'extrémité (7,8) entre eux ont une section constante sur toute leur longueur.

4. Machine électrique tournante suivant l'une des revendications 1 à 3, **caractérisée en ce que** les barres de liaison (42) comportent un pied central (43) engagé dans un logement (44) ménagé dans le fond de chaque intervalle entre deux dents (34) consécutives du noyau magnétique (33), des aimants supplémentaires (46,48) étant interposés entre le pied central et les parois latérales et de fond dudit logement (44).

## Patentansprüche

1. Elektrische Doppelerregermaschine, umfassend einen Rotor und einen Stator, dessen Magnetkreis eine Statorwicklung (16; 56) trägt, in der der Stator einen ringförmigen Magnetkern (13; 52) und mindestens eine Erregerwicklung (14, 15; 54, 55) umfasst, wobei die Statorwicklung (16; 56) auf den Kern gewickelt ist, wobei die Gesamtheit in einem Magnetkranz (20; 60) angeordnet ist, der mit der Außenseite des Statorkerns (13; 52) in Kontakt steht, wobei der Kranz zwei radiale Endleisten (21, 22; 61, 62) umfasst, und wobei der Rotor (2; 32) einen Magnetkreis umfasst, der Umfangsabschnitte (9, 10; 39, 40) aufweist, wobei die radialen Endleisten (21, 22; 61, 62) des Magnetkranzes (20; 60) des Stators mit den Umfangsabschnitten (9, 10; 39, 40) des Magnetkreises des Rotors (2; 32) Luftspalte (23, 24; 63, 64) definieren, die Rückführungen für die Flusslinien bilden, **dadurch gekennzeichnet, dass** der Rotor magnetische Endflansche (7, 8; 37, 38), deren Umfangsabschnitte (9, 10; 39, 40) mit den radialen Endleisten (21, 22; 61, 62) des Magnetkranzes des Stators (11; 41) die Luftspalte zur Rückführung der Flusslinien definieren, die zwischen den magnetischen Endflanschen (7, 8; 37, 38) angeordnet sind, einen Magnetkern (3; 33), der mit regelmäßig an seiner Peripherie verteilten Radialzähnen (4; 34) versehen ist, Ringmagneten (5, 6; 35, 36), die beideraeits der axial en Enden des Kerns (3 ; 33) angeordnet und an den Kern durch die magnetischen Endflansche angelegt werden, und mehrere magnetische Teile zur Verbindung der Endflansche miteinander umfasst, die von Stäben (12; 42) zur Verbindung der in den Zwischenräumen zwischen den Radialzähnen (4; 34) des Magnetkerns (3; 33) angeordneten Endflansche (7, 3; 37, 38) gebildet sind.

2. Elektrische Maschine nach Anspruch 1, **dadurch gekennzeichnet, dass** die zusätzlichen Magnete (25; 50) zwischen jedem der Stäbe (12; 42) und mindestens den Seitenwänden der Radialzähne (4; 34) des Kerns, die die Zwischenräume definieren, angeordnet sind.

3. Elektrische Maschine nach einem der Ansprüche 1 und 2, **dadurch gekennzeichnet, dass** die Stäbe (12) zur Verbindung der Endflansche (7, 8) miteinander einen konstanten Querschnitt auf ihrer gesamten Länge autweisen.

4. Elektrische Maschine nach einem der Ansprüche 1 bis 3, **dadurch gekennzeichnet, dass** die Verbindungsstäbe (42) einen zentralen Fun (43) umfassen, der in eine Lagerung (44), die im Boden jedes Zwischenraums zwischen zwei aufeinander folgenden Zähnen (34) des Magnetkerns (33) vorgesehen ist, eingreift, wobei zusätzliche Magnete (46, 48) zwischen dem zentralen Fuß und den Seitenwänden und dem Boden der Lagerung (44) angeordnet sind.

## Claims

1. Rotating double-excitation electrical machine comprising a rotor and a stator, the magnetic circuit of which has a stator winding (16; 56), in which the stator comprises an annular magnetic core (13; 52) and at least one excitation winding (14, 15; 54, 55), the stator winding (16; 56) being wound on the core, the whole being located in a magnetic ring (20; 60) in contact with the outer surface of the stator core (13; 52), the said ring comprising two flanges (21, 22; 61, 62) at its radial extremities, and the rotor (2; 32) comprises a magnetic circuit having peripheral portions (9, 10; 39, 40), the said flanges (21, 22; 61, 62) at the radial extremities of the said magnetic ring (20; 60) of the stator together with the peripheral portions (9, 10; 39, 40) of the magnetic circuit of the rotor (2; 32) defining air gaps (23, 24; 63, 64) constituting flux return paths, **characterised in that** the rotor has magnetic flanges (7, 8; 37, 38) at the extremities, the peripheral portions of which (9, 10; 39, 40) together with the flanges (21, 22; 61, 62) at the radial extremities of the said magnetic ring of the stator (11; 41) define the said flux return air gaps and, in a location between the magnetic flanges (7, 8; 37, 38) at the extremities, a magnetic core (3; 33) provided with teeth (4; 34) which are regularly radially distributed about its periphery, and annular magnets (5, 6; 35, 36) which are located on either side of the axial extremities of the core (3; 33) and are secured against the core by the extremity magnetic flanges and several magnetic parts connecting the extremity flanges with each other, comprising bars (12; 42) linking the extremity flanges (7, 8; 37, 38) housed in the gaps between the radial teeth 4; 34) of the magnetic core (3; 33).

2. Rotating electrical machine according to claim 1, **characterised in that** supplementary magnets (25, 50) are located between each of the said bars (12; 42) and at least the lateral walls of the radial teeth (4; 34) of the core defining the said gaps.

3. Rotating electrical machine according to either of claims 1 and 2, **characterised in that** the bars (12) linking the extremity flanges (7, 8) together have a constant cross-section over their entire length.

4. Rotating electrical machine according to any one of claims 1 to 3, **characterised in that** the linking bars (42) have a central foot (43) engaging in a housing (44) provided in the base of each gap between two consecutive teeth (34) of the magnetic core (33), additional magnets (46, 48) being located between the central foot and the lateral walls and the base of the said housing (44).
